# EUROPÄISCHE PATENTSCHRIFT

(11) **EP 0 739 180 B1**
(45) Veröffentlichungstag und Bekanntmachung des Hinweises auf die Patenterteilung: **08.07.1998**
(21) Anmeldenummer: 95928858.0
(22) Anmeldetag: 20.03.1995
(51) Int. Cl.: A47J 45/08, A47J 45/06

(54) **WÄRMEISOLIERENDER GRIFF FÜR METALL-KOCHTÖPFE U.DGL.**
HEAT INSULATING HANDLE FOR METAL SAUCEPANS AND THE LIKE
POIGNEE ISOLEE THERMIQUEMENT POUR RECIPIENTS DE CUISSON EN METAL ET USTENSILES ANALOGUES

(30) Priorität: 24.03.1994 DE 9405011 U
(43) Veröffentlichungstag der Anmeldung: 30.10.1996
(73) Patentinhaber: HEINRICH BERNDES PRODUKTIONSGESELLSCHAFT MBH, 59757 Arnsberg (DE)
(72) Erfinder: KLOPPSTECK, Gerd, D-59757 Arnsberg (DE)
(74) Vertreter: Heldt, Gert, Dr. Dipl.-Ing.
(86) Internationale Anmeldenummer: EP9501034
(87) Internationale Veröffentlichungsnummer: WO9525458

(56) Entgegenhaltungen:
- EP-A- 0 186 000
- CH-A- 130 876
- DE-U- 9 014 283
- FR-A- 2 683 136

## Beschreibung

Die Erfindung betrifft aus einem Griffbügel oder einer Griffplatte und einem integral angesetzten Befestigungskörper bestehende Griffe aus wärmeisolierendem Material für Kochtöpfe, Schmortöpfe, Bratpfannen u.dgl. topf- oder wannenförmige Geschirre aus Metall, die im Bereich des zu befestigenden Griffs an der Außenseite ihrer Wandung jeweils einen mit einer Gewindebohrung versehenen Ansatz aufweisen, auf welchem der im Befestigungsbereich eine komplementär zur Außenwandung geformte Anlagefläche aufweisende und mit einer Ausnehmung zur Aufnahme des Ansatzes versehene Befestigungskörper aufsetzbar und mittels einer durch eine Bohrung im Befestigungskörper in die Gewindebohrung eingeschraubten Befestigungsschraube befestigbar ist, wobei die Bohrung im Befestigungskörper des Griffs eine Ansenkung für den Kopf der Befestigungsschraube aufweist, in welcher der Kopf der Befestigungsschraube in der bestimmungsgemäßen Befestigungsstellung versenkt angeordnet ist.

Die Befestigung von wärmeisolierenden - vorzugsweise aus Kunststoff hergestellten - Griffen an Töpfen, Brätern, Pfannen u.dgl. aus Metall erfolgt in vielen Fällen so, daß im Aufsetzbereich der Griffe auf der Außenseite des Topfs ein Befestigungsansatz aufgenietet, aufgeschweißt oder aufgelötet ist, der mit einer Gewindebohrung versehen ist, in welche der Gewindeschaft einer durch eine Befestigungsbohrung im Griff hindurchgeführten Befestigungsschraube einschraubbar ist (FR-A- 2 683 136). Die Befestigungsbohrung ist dabei mit einer äußeren Ansenkung versehen, in welcher der Kopf der Befestigungsschraube in der bestimmungsgemäßen Befestigungsstellung versenkt angeordnet ist. Dadurch wird verhindert, daß der beim Kochvorgang durch Wärmeleitung von der Topfwandung über den Ansatz und den Gewindeschaft erhöhte Temperatur aufweisende Kopf der Befestigungsschraube vom Benutzer versehentlich berührt werden kann, was dann nicht nur zur Verbrennung, sondern - aufgrund des Schreckmoments - auch zu einem Fallenlassen des Topfs führen könnte. Diese an sich einfache und bewährte Befestigungsweise befriedigt allerdings - zumindest bei Metalltöpfen der höheren Preisklassen - ästhetisch nicht unbedingt, zumal der in der Regel metallisch glänzende Kopf der Befestigungsschraube auch in der Ansenkung noch sichtbar ist. Die Ansenkung ihrerseits bildet außerdem ein Nest für die Ansammlung von Schmutz oder Spülresten, und ist selbst nur schwierig rein zu halten.

Der Erfindung liegt demgegenüber die Aufgabe zugrunde, einen wärmeisolierenden Griff für metallische Kochtöpfe u.dgl. zu schaffen, der in gleicher Weise einfach und preisgünstig montier- und demontierbar ist, dabei aber die geschilderten Nachteile der bekannten Griffe nicht aufweist und darüber hinaus auch noch ein optisch attraktives Aussehen aufweist, welches bei Bedarf auch veränderbar ist.

Ausgehend von einem Griff der eingangs erwähnten Art wird diese Aufgabe erfindungsgemäß dadurch gelöst, daß im Bereich der Ansenkung der Bohrung im Befestigungskörper eine die Mündung der Ansenkung verschließende Abdeckung vorgesehen ist.

Im einfachsten Fall kann diese Abdeckung von einem in die Ansenkung eingepaßten niedrigen Stopfen oder einer Verschlußscheibe gebildet werden, welche dann das Eindringen von Schmutz in die Ansenkung verhindern. Durch im Vergleich zur Farbe des eigentlichen Griffs abweichende Farbgestaltung der Abdeckung kann hier auch ein zusätzlicher ästhetisch reizvoller Effekt erzielt werden.

In einer bevorzugten Weiterbildung der Erfindung ist die Ausgestaltung so getroffen, daß eine über die Mündung der Ansenkung verlaufende, sich über die Breite des Befestigungskörpers erstreckende horizontale Nut geringer Tiefe vorgesehen ist, in welche die in ihrer Breite der Breite der Nut entsprechend ausgebildete streifenförmige Abdeckung eingesetzt ist. Insbesondere dann, wenn eine solche streifenförmige Abdeckung in einer zur Farbe des Griffs kontrastierenden Signalfarbe eingefärbt ist, gliedert das den Griff reizvoll und bietet ein attraktives Aussehen. Andererseits kann die Abdeckung natürlich auch in Farbe und Oberflächenstruktur dem Griff angepaßt sein, so daß sie dann nach dem Einsetzen in die Nut optisch vollständig verschwindet. Die Art und Weise der Befestigung des Griffs am Topf ist dann nicht mehr ohne weiteres erkennbar.

Die Nut kann sich dabei über die gesamte Breite und zusätzlich die seitlichen Begrenzungsflächen des Befestigungskörpers bis zur Anlagefläche erstrecken, wobei dann die streifenförmige Abdeckung dem Verlauf der Nut entsprechend die Form eines U-förmigen Bügels hat, der von vorn in die Nut eingeschoben wird.

Die streifenförmige Abdeckung hat dabei vorzugsweise eine der Tiefe der Nut entsprechende Dicke, wodurch ihre sichtbare Außenfläche ohne Stufe oder Absatz in die Außenfläche des Griffs übergeht und das Entstehen von Stufen oder Vorsprüngen oder auch Vertiefungen, in denen sich Schmutz ansammeln könnte, ausgeschlossen ist. Alternativ ist natürlich auch eine abweichende Ausgestaltung der Abdeckung derart, daß sie an der Außenseite eine vortretende Profilierung aufweist, möglich.

In den anlageflächenseitigen Enden der Nut wird dann zweckmäßig jeweils eine Vertiefung vorgesehen, in welche an den Enden des U-förmigen Bügels vorgesehene Vorsprünge eingerastet sind.

Dabei empfiehlt es sich, die Vertiefung in den anlageflächenseitigen Enden der Nut über die gesamte Breite der Nut zu erstrecken und an ihrer topfabgewandten Begrenzung eine etwa rechtwinklig zum Nutboden verlaufende, zum mit dem Griff zu versehenden Topf weisende Verriegelungsfläche auszubilden, und die an den Enden des U-förmigen Bügels vorgesehenen Vorsprünge mit jeweils einer komplementären, von den freien Enden des Bügels wegweisenden Verriegelungsfläche zu versehen. In der bestimmungsgemäßen Befestigungsstellung des U-förmigen Bügels in der Nut ist dann sichergestellt, daß sich der U-förmige Bügel nicht versehentlich lösen kann. Erst dann, wenn die Enden der Bügel bewußt aufgebogen werden, was bei genauer Einpassung des Bügels in die Nut nur mit einem speziellen hakenförmigen Werkzeug möglich ist, ist eine Demontage möglich, die dann aber sehr einfach und schnell erfolgen kann.

Zur Erleichterung der Montage können die Verriegelungsvorsprünge an den Enden des U-förmigen Bügels an ihren zum freien Bügelende weisenden Seiten durch schräg geneigt verlaufende Anlaufflächen begrenzt sein, welche das Einschieben der freien Bügelenden in die seitlichen Nutabschnitte vereinfachen. Der lichte Abstand zwischen den in die in den seitlichen Begrenzungsflächen des Begrenzungskörpers vorgesehenen Abschnitte der Nut eingesetzten Schenkelabschnitten des U-förmigen Bügels ist in unmontiertem Zustand vorzugsweise etwas kleiner als der über den Boden der seitlichen Nutabschnitte gemessene Abstand, wodurch die Schenkelabschnitte bei der Montage zwangsläufig elastisch aufgebogen werden. Die an den Enden des Bügels vorgesehenen Vorsprünge werden also unter elastischer Vorspannung in den zugeordneten Vertiefungen gehalten.

Zur Sicherung des U-förmigen Bügels gegen Verschiebungen in Nut-Längsrichtung kann von der nutbodenzugewandten Seite des Stegabschnitts des U-förmigen Bügels ein Vorsprung in die Mündung der Ansenkung im Befestigungskörper vortreten, wobei dieser Vorsprung dann zweckmäßig der Mündung der Ansenkung entsprechend komplementär begrenzt ist.

Die Erfindung ist in der folgenden Beschreibung eines Ausführungsbeispiels in Verbindung mit der Zeichnung näher erläutert, und zwar zeigt:
- Fig. 1: eine Draufsicht auf einen in der erfindungsgemäßen Weise ausgebildeten Griff;
- Fig. 2: eine Vorderansicht des Griffs, gesehen in Richtung des Pfeils 2 in Fig. 1 ohne die die Ansenkung für die Befestigungsschraube kaschierende Abdeckung;
- Fig. 3: eine Rückansicht des Griffs, gesehen in Richtung des Pfeils 3 in Fig. 1;
- Fig. 4: eine Schnittansicht, gesehen in Richtung der Pfeile 4-4 in Fig. 2;
- Fig. 5: eine Draufsicht auf die als U-förmiger Bügel ausgebildete Abdeckung für die Ansenkung der Befestigungsbohrung im Griff;
- Fig. 6: eine Ansicht des U-förmigen Bügels, gesehen in Richtung des Pfeils 6 in Fig. 5; und
- Fig. 7: eine Ansicht des U-förmigen Bügels, gesehen in Richtung des Pfeils 7 in Fig. 6.

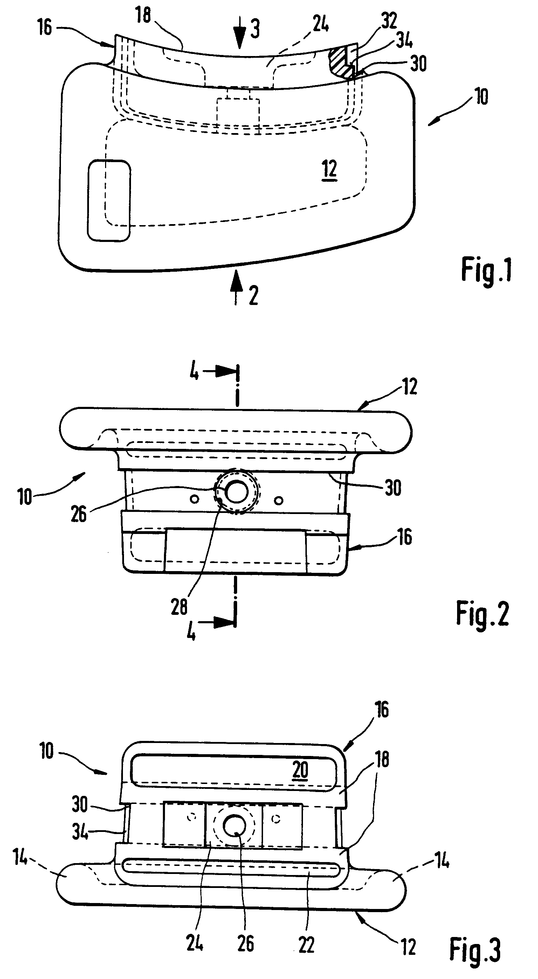

Der in den Figuren 1 bis 4 gezeigte, in seiner Gesamtheit mit 10 bezeichnete erfindungsgemäße Griff ist ein Seitengriff, wie sie - paarweise und diametral gegenüberliegend - an der Außenseite der Topfwandung von z.B. aus korrosionsbeständigem Stahl hergestellten Kochtöpfen angebracht sind. Der aus einem geeigneten wärmebeständigen - vorzugsweise duroplastischen - Kunststoff hergestellte und sich daher durch die beim Kochvorgang in die Wandung des Kochtopfs übertragene Wärme nicht bzw. nur in geringem Maße erwärmende Griff setzt sich im dargestellten Fall aus einer Griffplatte 12 mit wulstartig verstärktem Rand 14 und - unterhalb der Griffplatte - einem integral angesetzten Befestigungskörper 16 zusammen, dessen topfzugewandte Anlagefläche 18 komplementär zum Befestigungsbereich der Wandung des Kochtopfs geformt ist. Der Befestigungskörper 16 ist im speziellen Fall nicht massiv aus dem verwendeten Kunststoffmaterial hergestellt, sondern weist - zur Gewichts- und Materialersparnis - zur Kochtopfwandung hin offenen Ausnehmungen 20 und 22 auf. Im Bereich zwischen den Ausnehmungen 20 und 22 ist eine weitere speziell geformte Ausnehmung 24 vorgesehen, deren Form einen im Befestigungsbereich an der Außenwandung des Kochtopfs vorgesehenen (nicht gezeigten) Ansatz komplementär entspricht.

Im Falle des Griffs 10 ist die Ausnehmung 24 im Befestigungskörper 16 so geformt, daß ein auch bei bekannten Griff-Befestigungsanordnungen topfseitig verwendeter Ansatz in Form eines aus metallischem Flachmaterial gekanteten Bügels passend aufgenommen wird. Der Bügel ist an seinen beiden an der Topfwandung anliegenden Enden, z.B. durch Verschweißung oder Löten unlösbar mit der Topfwandung verbunden und weist im dazwischenliegenden, von der Topfwandung entfernten Stegbereich eine eingeprägte Büchse auf, in welche eine Gewindebohrung eingebracht ist. Im Befestigungskörper 16 ist in dem in der bestimmungsgemäßen Befestigungsstellung des Griffs 10 an der Topfwandung mit der Gewindebohrung des Befestigungs-Bügels fluchtenden Bereich eine Bohrung 26 vorgesehen, die das Hindurchführen und Einschrauben des Gewindeschafts einer (nicht gezeigten) Befestigungsschraube in die Gewindebohrung im Befestigungs-Bügel erlaubt. Die Bohrung 26 mündet an ihrem topfabgewandten Ende in einer Ansenkung 28 für den Kopf der erwähnten Befestigungsschraube, welcher also in der bestimmungsgemäßen Befestigungsstellung vollständig innerhalb der Ansenkung 28 liegt, so daß die Gefahr eines Berührens des Kopfs dieser über den Gewindeschaft und den Befestigungs-Bügel in metallischem Kontakt mit dem Topf stehenden Befestigungsschraube durch den den Kochtopf am Griff 10 erfassenden Benutzer mit Sicherheit vermieden ist.

Quer über die Ansenkung 28 verläuft im Befestigungskörper 16 eine horizontale Nut 30 relativ geringer Tiefe, welche sich über die gesamte Breite und die seitlichen Begrenzungsflächen des Befestigungskörpers 16 bis zu dessen Anlagefläche 18 erstrecken. Die Breite der Nut ist dabei etwa gleich dem Durchmesser der Ansenkung 28 bzw. nur geringfügig breiter bemessen. In den anlageflächenseitigen Endbereichen ist die Nut 30 jeweils mit einer Vertiefung 32 versehen, von denen in Fig. 1 eine in dem im oberen rechten Eckbereich des Befestigungskörpers 16 aufgebrochenen und geschnittenen Bereich erkennbar ist. Es ist ersichtlich, daß die Vertiefungen 32 im Übergangsbereich zur Nut 30 verringerter Tiefe jeweils eine Verriegelungsfläche 34 bilden.

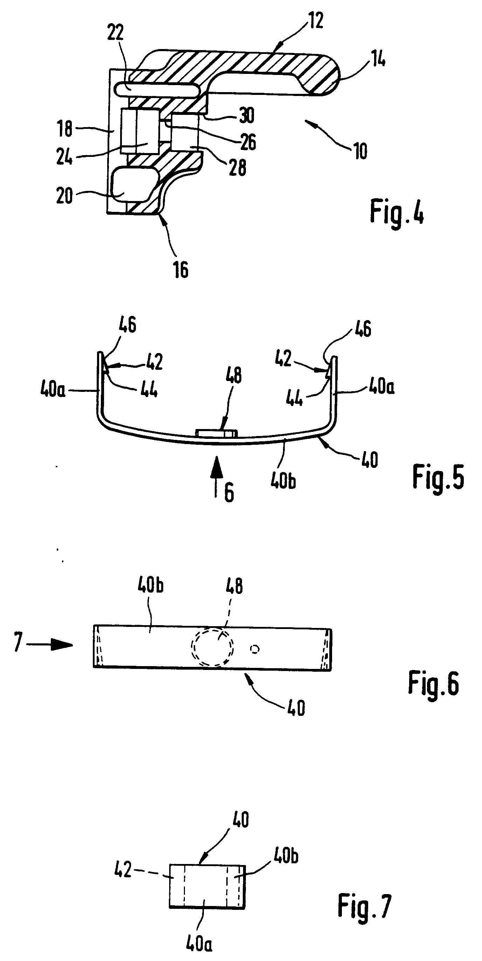

In die Nut 30 wird nach der Befestigung des Griffs 10 am Topf mittels der erwähnten Befestigungsschraube eine Abdeckung in Form des in den Figuren 5 bis 7 gezeigten U-förmigen Bügels 40 eingesetzt, welcher in seiner Dicke und seinen Abmessungen so bemessen ist, daß er nach seiner Montage die Nut ausfüllt und bündig in die Begrenzungswände des Befestigungskörpers 16 übergeht. Je nachdem, ob der Bügel 40 aus einem in der Oberflächenstruktur und Farbe dem Material des Griffs 10 entsprechenden oder einem von diesem Griffmaterial in der Oberflächenstruktur und der Farbe abweichenden Material hergestellt ist, ist der Bügel 40 nach der Montage praktisch unsichtbar oder er wirkt als bewußt vorgesehenes optisch attraktives bandförmiges Dekorationselement. An den den Vertiefungen 32 zugewandten Innenseiten weisen die Endabschnitte der seitlichen Schenkel 40a des Bügels 40 Vorsprünge 42 auf, welche beim Einführen des Bügels 40 in die Nut 30 in die jeweils zugeordnete Vertiefung 32 einrasten. An den den Enden der Schenkel 40a abgewandten Enden sind an den Vorsprüngen 42 Verriegelungsflächen 44 ausgebildet, welche in der bestimmungsgemäßen Befestigungsstellung des Bügels 40 in der Nut 30 an den Verriegelungsflächen 34 der Vertiefungen 32 anliegen und so das Abziehen des Bügels aus der Nut verhindern, sofern die Enden der Schenkel 40a nicht so weit aufgebogen werden, daß die Verriegelungsflächen 44 von den Verriegelungsflächen 34 freikommen.

Zur Erleichterung der Montage des Bügels 40 in der Nut 30 sind an den Vorsprüngen 42 im übrigen schräg geneigt zu den freien Bügelenden verlaufende Anlaufflächen 46 vorgesehen. Im nicht montierten Ausgangszustand ist der lichte Abstand zwischen den seitlichen Schenkelabschnitten 40a des Bügels 40 etwa geringer als der Abstand zwischen dem Boden der Nut 30 im Bereich der Seitenflächen des Befestigungskörpers, so daß die Schenkelabschnitte 40a bei der Montage des Bügels elastisch aufgeweitet werden und auch dann noch unter einer gewissen Vorspannung stehen, wenn die Vorsprünge 42 in die Vertiefungen 32 eingerastet sind.

In Fig. 5 und 6 ist erkennbar, daß von der dem Boden der Nut 30 zugewandten Seite des die äußeren Schenkelabschnitte 40a verbindenden Stegabschnitts 40b des U-förmigen Bügels 40 mittig ein niedriger Vorsprung 48 vortritt, der im gezeigten Fall die Form eines niedrigen zylindrischen Stopfens hat, dessen Außendurchmesser im wesentlichen gleich dem Durchmesser des Mündungsbereichs der Ansenkung 28 im Befestigungskörper 16 ist. In der bestimmungsgemäßen Befestigungsstellung greift der Vorsprung 48 also passend in die Ansenkung 28 ein und sichert so den Bügel zusätzlich gegen seitliche Verschiebungen in der Nut 30.

Es ist ersichtlich, daß im Rahmen des Erfindungsgedankens Abwandlungen und Weiterbildungen des beschriebenen Ausführungsbeispiels des erfindungsgemäßen Griffs 10 verwirklichbar sind. Solche Abänderungen können beispielsweise die Länge und Tiefe der Nut 30 betreffen. So ist durchaus denkbar, daß die Nut nur über die betrachterzugewandte Vorderseite des Befestigungskörpers 16 verläuft, d.h. nicht in den Seitenflächen bis zur Anlagefläche 18 geführt ist. Auch eine noch kürzere Länge derart, daß sie sich nur über einen Teilabschnitt der Breite des Befestigungskörpers erstreckt, ist denkbar. Der Bügel 40 ist dann entsprechend verkürzt und hat praktisch nur die Form einer dünnen Platte, welche dann zweckmäßig mittels des mit geringem Übermaß über den Durchmesser der Ansenkung bemessenen stopfenartigen Vorsprung 48 in der Ansenkung gehalten wird, wobei alternativ oder zusätzlich auch andere Rastmittel denkbar sind. Anstelle der Ausbildung des Bügels derart, daß er sozusagen stufenlos fluchtend in die Wandung des Befestigungskörpers 16 übergeht, kann der Bügel an seiner Außenseite auch bewußt so profiliert sein, daß er über die Wandung des Befestigungskörpers vortritt oder zurückspringt, wenn dies aus optisch ästhetischen Gründen erwünscht ist. Dabei sollten solche vorspringenden oder zurückspringenden Profilierungen dann allerdings im Hinblick auf eine möglichst einfache Reinigung ausgerundet und für Reinigungsgeräte leicht zugänglich ausgebildet sein.

## Patentansprüche

1. Griff (10), bestehend aus einem Griffbügel oder einer Griffplatte (12) und einem integral angesetzten Befestigungskörper (16), aus warmeisolierendem Material, für Kochtöpfe, Schmortöpfe, Bratpfannen und dergleichen topf- oder wannenförmige Geschirre aus Metall, die im Bereich des zu befestigenden Griffs (10) an der Außenseite ihrer Wandung jeweils einen mit einer Gewindebohrung versehenen Ansatz aufweisen, auf welchem der im Befestigungsbereich eine komplementär zur Außenwandung geformte Anlagefläche (18) aufweisende und mit einer Ausnehmung (24) zur Aufnahme des Ansatzes versehene Befestigungskörper (16) aufsetzbar und mittels einer durch eine Bohrung (26) im Befestigungskörper (16) in die Gewindebohrung eingeschraubten Befestigungsschraube befestigbar ist,wobei die Bohrung (26) im Befestigungskörper (16) des Griffs (10) eine Ansenkung (28) für den Kopf der Befestigungsschraube aufweist, in welcher der Kopf der Befestigungsschraube in der bestimmungsgemäßen Befestigungsstellung versenkt angeordnet ist,
**dadurch gekennzeichnet**,
daß im Bereich der Ansenkung (28) der Bohrung (26) im Befestigungskörper (16) eine die Mündung der Ansenkung (28) verschließende Abdeckung, insbesondere ein Bügel (40), vorgesehen ist.

2. Griff nach Anspruch 1, gekennzeichnet durch eine über die Mündung der Ansenkung (28) verlaufende, sich über die Breite des Befestigungskörpers (16) erstreckende horizontale Nut (30) geringer Tiefe, in welche die in ihrer Breite der Breite der Nut (30) entsprechend ausgebildete streifenförmige Abdeckung eingesetzt ist.

3. Griff nach Anspruch 2, dadurch gekennzeichnet, daß die Nut (30) sich über die gesamte Breite und die seitlichen Begrenzungsflächen des Befestigungskörpers (16) bis zur Anlagefläche (18) erstreckt, und daß die streifenförmige Abdeckung dem Verlauf der Nut (30) entsprechend die Form eines U-förmigen Bügels (40) hat.

4. Griff nach Anspruch 2 oder 3, dadurch gekennzeichnet, daß die streifenförmige Abdeckung eine der Tiefe der Nut (30) entsprechende Dicke hat.

5. Griff nach Anspruch 3 oder 4, dadurch gekennzeichnet, daß in den anlageflächenseitigen Enden der Nut (30) jeweils eine Vertiefung (32) vorgesehen ist, in welche an den Enden des U-förmigen Bügels (40) vorgesehene Vorsprünge (42) eingerastet sind.

6. Griff nach Anspruch 5, dadurch gekennzeichnet, daß die Vertiefung (32) in den anlageflächenseitigen Enden der Nut (30) sich über die gesamte Breite der Nut (30) erstrecken und an ihrer topfabgewandten Begrenzung eine etwa rechtwinklig zum Nutboden verlaufende, zum mit dem Griff zu versehenden Topf weisende Verriegelungsfläche (34) aufweisen, und daß die an den Enden des U-förmigen Bügels (40) vorgesehenen Vorsprünge (42) mit jeweils einer komplementären, von den freien Enden des Bügels wegweisenden Verriegelungsflächen (44) versehen sind.

7. Griff nach Anspruch 6, dadurch gekennzeichnet, daß die Verriegelungsvorsprünge (42) an den Enden des U-förmigen Bügels (40) an ihren zum freien Bügelende weisenden Seiten durch schräg geneigt verlaufende Anlaufflächen (46) begrenzt sind.

8. Griff nach einem der Ansprüche 3 bis 7, dadurch gekennzeichnet, daß der lichte Abstand zwischen den in die in den seitlichen Begrenzungsflächen des Befestigungskörpers (16) vorgesehenen Abschnitte der Nut (30) eingesetzten Schenkelabschnitten (40a) des U-förmigen Bügels (40) in unmontiertem Zustand etwas kleiner als der über den Boden der seitlichen Nutabschnitte gemessene Abstand ist.

9. Griff nach einem der Ansprüche 3 bis 8, dadurch gekennzeichnet, daß von der nutbodenzugewandten Seite des Stegabschnitts (40b) des U-förmigen Bügels (40) ein Vorsprung (48) in die Mündung der Ansenkung (28) im Befestigungskörper (16) vortritt.

10. Griff nach Anspruch 9, dadurch gekennzeichnet, daß der in die Ansenkung (28) eingreifende Vorsprung (48) der Mündung der Ansenkung (28) entsprechend komplementär begrenzt ist.

## Claims

1. A handle (10) comprising a handle hoop portion or a handle plate (12) and an integrally fitted fixing body (16), of heat-insulating material, for cooking pots, braising pots, frying pans and the like pot-shaped or pan-shaped kitchenware of metal, which in the region of the handle (10) to be fixed have at the outside of their wall a respective projection which is provided with a screwthreaded bore and on which the fixing body (16) having in the fixing region a contact surface (18) of a complementary shape to the outside wall and provided with a recess (24) for receiving the projection can be fitted and can be fixed by means of a fixing screw which is screwed into the screwthreaded bore through a bore (26) in the fixing body (16), wherein the bore (26) in the fixing body (16) of the handle (10) has a countersink (28) for the head of the fixing screw, in which the head of the fixing screw is arranged in sunk relationship in the intended fixing position, characterised in that provided in the region of the countersink (28) of the bore (26) in the fixing body (16) is a cover means, in particular a hoop member (40), for closing the mouth opening of the countersink (28).

2. A handle according to claim 1 characterised by a horizontal groove (30) of shallow depth, which extends over the mouth opening of the countersink (28) and which extends over the width of the fixing body (16) and into which is fitted the strip-shaped cover means which in respect of its width is of a corresponding configuration to the width of the groove (30).

3. A handle according to claim 2 characterised in that the groove (30) extends over the entire width and the lateral boundary surfaces of the fixing body (16) as far as the contact surface (18) and that the strip-shaped cover means is in the form of a U-shaped hoop member (40) corresponding to the configuration of the groove (30).

4. A handle according to claim 2 or claim 3 characterised in that the strip-shaped cover means is of a thickness corresponding to the depth of the groove (30).

5. A handle according to claim 3 or claim 4 characterised in that provided in each of the ends of the groove (30), which are towards the contact surface, is a respective depression (32) into which are engaged projections (42) provided at the ends of the U-shaped hoop member (40).

6. A handle according to claim 5 characterised in that the depressions (32) in the ends of the groove (30), which are towards the contact surface, extend over the entire width of the groove (30) and at their boundary which is remote from the pot have a locking surface (34) which extends approximately at a right angle to the bottom of the groove and which faces towards the pot to be provided with the handle, and that the projections (42) at the ends of the U-shaped hoop member (40) are each provided with a respective complementary locking surface (44) which faces away from the respective free ends of the hoop member.

7. A handle according to claim 6 characterised in that at the ends of the U-shaped hoop member (40), at their sides which face towards the free ends of the hoop member, the locking projections (42) are defined by obliquely inclinedly extending run-on surfaces (46).

8. A handle according to any one of claims 3 to 7 characterised in that the internal spacing between the limb portions (40a) of the U-shaped hoop member (40), which are fitted into the portions of the groove (30) which are provided in the lateral boundary surfaces of the fixing body (16), is in the non-assembled condition somewhat smaller than the spacing measured across the bottom of the lateral groove portions.

9. A handle according to one of claims 3 to 8 characterised in that from the side of the web portion (40b) of the U-shaped hoop member (40), which side is towards the bottom of the groove, a projection (48) projects into the mouth opening of the countersink (28) in the fixing body (16).

10. A handle according to claim 9 characterised in that the projection (48) which engages into the countersink (28) is defined so as to be complementary to the mouth opening of the countersink (28).

## Revendications

1. Poignée (10) formée d'une anse ou d'une oreille de poignée (12) et d'un corps de fixation (16) faisant partie intégrante de celle-ci, en matière thermiquement isolante, destinée à des marmites, des cocottes, des poêles à frire et de la vaisselle similaire se présentant sous la forme de pots ou de plats en métal, qui comportent dans la région de la poignée (10) à fixer, sur la face extérieure de leur paroi, un bossage avec un trou fileté sur lequel le corps de fixation (16) qui, dans la zone de fixation, est pourvu d'une surface d'appui (18) avec une forme complémentaire de celle de la paroi extérieure et d'un évidement (24) recevant le bossage, peut être monté et fixé au moyen d'une vis de fixation engagée dans un perçage (26) dans le corps de fixation (16) et vissée dans le trou fileté, le perçage (26) dans le corps de fixation (16) de la poignée (10) comportant un lamage (28) pour la tête de la vis de fixation, dans lequel la tête de la vis de fixation est rentrée dans la position normale de fixation, caractérisée par le fait qu'il est prévu dans la région du lamage (28) du perçage (26) dans le corps de fixation (16) un cache, notamment un étrier (40) qui obture l'entrée du lamage (28).

2. Poignée selon la revendication 1, caractérisée par une rainure (30) horizontale, de faible profondeur, qui s'étend au-dessus du lamage, (28) sur toute la largeur du corps de fixation (16), et dans laquelle le cache en forme de bande de largeur adaptée à la largeur de la rainure (30) est monté.

3. Poignée selon la revendication 2, caractérisée par le fait que la rainure (30) s'étend sur toute la largeur et sur les faces latérales du corps de fixation (16) jusqu'à la surface d'appui (18) et par le fait que le cache en forme de bande, en accord avec le tracé de la rainure (30), a la forme d'un étrier en U (40).

4. Poignée selon la revendication 2 ou 3, caractérisée par le fait que le cache en forme de bande a une épaisseur qui correspond à la profondeur de la rainure (30).

5. Poignée selon la revendication 3 ou 4, caractérisée par le fait qu'il est prévu aux extrémités côté surface d'appui de la rainure (30) chaque fois une cavité (32) dans laquelle s'encliquètent des saillies (42) prévues aux extrémités de l'étrier en forme de U (40).

6. Poignée selon la revendication 5, caractérisée par le fait que la cavité (32) dans les extrémités côté surface d'appui de la rainure (30) s'étendent sur toute la largeur de la rainure (30) et présentent sur leur bord éloigné du récipient une surface de verrouillage (34) sensiblement perpendiculaire au fond du récipient tournée vers le récipient à munir de la poignée et par le fait que les saillies (42) prévues aux extrémités de l'étrier en forme de U (40) sont pourvues chacune d'une surface de verrouillage (44) complémentaire dirigée dans la direction opposée aux extrémités libres de l'étrier.

7. Poignée selon la revendication 6, caractérisée par le fait que les saillies de verrouillage (42) aux extrémités de l'étrier en forme de U (40) sont limitées par des surfaces de glissement (46) inclinées.

8. Poignée selon une des revendications 3 à 7, caractérisée par le fait que l'écartement entre les parties d'ailes (40a) de l'étrier en forme de U (40) qui sont logées dans les tronçons de rainure (30) aménagés dans les faces latérales du corps de fixation (16), à l'état non assemblé, est légèrement inférieure à la distance entre les tronçons de rainure latéraux mesurée au niveau du fond.

9. Poignée selon une des revendications 3 à 8, caractérisée par le fait qu'une saillie (48) sur la face de la partie âme (40b) de l'étrier en forme de U (40) tournée vers le fond de rainure s'avance dans l'entrée du lamage (28) dans le corps de fixation (16).

10. Poignée selon la revendication 9, caractérisée par le fait que la saillie (48) qui s'engage dans le lamage (28) est complémentaire de l'entrée du lamage (28).
